# EUROPÄISCHE PATENTSCHRIFT

(11) **EP 0 903 506 B1**
(45) Veröffentlichungstag und Bekanntmachung des Hinweises auf die Patenterteilung: **23.04.2003**
(21) Anmeldenummer: 98117327.1
(22) Anmeldetag: 12.09.1998
(51) Int. Cl.: F16B 15/08, F16B 27/00

(54) **Magazinstreifen für Befestigungselemente**
Web strip for fastening elements
Bande de maintien pour éléments de fixation

(30) Priorität: 18.09.1997 DE 29716740 U
(43) Veröffentlichungstag der Anmeldung: 24.03.1999
(73) Patentinhaber: Adolf Würth GmbH & Co. KG, 74653 Künzelsau (DE)
(72) Erfinder: Humm, Siegfried, 74214 Schöntal-Westernhausen (DE); Schröter, Dirk, 74635 Kupferzell (DE)
(74) Vertreter: Patentanwälte Ruff, Wilhelm, Beier, Dauster & Partner

(56) Entgegenhaltungen:
- EP-A- 0 237 476
- AT-B- 382 697
- DE-U- 29 621 830
- DE-U- 29 716 740
- US-A- 5 069 340

## Beschreibung

Es ist bekannt, Befestigungselemente mit Setzgeräten zu setzen. Hierzu werden beispielsweise Geräte verwendet, die mit Hilfe von Treibladungen arbeiten. Wegen des automatischen Arbeitens werden die Befestigungselemente in Magazinstreifen in das Gerät eingesetzt, so daß ohne nachzuladen mehrere Befestigungselemente hintereinander gesetzt werden können.

Ein Beispiel für ein derartiges Magazin für Befestigungselemente ist aus der französischen Patentanmeldung 23 35 722 bekannt. Hierbei besteht das Magazinband aus einer Vielzahl nebeneinander angeordneter Aufnahmekörper für die Nägel. Jeder Aufnahmekörper ist etwa kreiszylindrisch aufgebaut. Nur im Bereich der Verbindung zweier benachbarter Aufnahmekörper ist die Kreisform etwas abgeflacht. Der Außendurchmesser des kreisförmigen Bereichs der Aufnahmekörper entspricht exakt dem Außendurchmesser der Köpfe der Nägel.

Ebenfalls bekannt ist ein Nagelstreifen (EP-A-237 476), bei dem der Aufnahmekörper im Bereich seiner beiden Stirnenden je eine Ringfläche aufweist, deren Durchmesser größer ist als der Durchmesser der Köpfe der Nägel. Damit soll verhindert werden, daß die Köpfe der Nägel beim Setzvorgang die Wand des Setzkanals des Geräts berühren.

Der Erfindung liegt die Aufgabe zu Grunde, eine Magazinband für Befestigungselemente zu schaffen, daß sehr einfach aufgebaut ist und dennoch eine hohe Betriebssicherheit aufweist.

Zur Lösung dieser Aufgabe schlägt die Erfindung ein Magazinband mit den im Schutzanspruch 1 genannten Merkmalen vor. Weiterbildungen der Erfindung sind Gegenstand von Unteransprüchen, deren Wortlaut durch Bezugnahme zum Inhalt der Beschreibung gemacht wird.

Mit dem Magazinband nach der Erfindung sind die Nägel im Setzkanal des Geräts korrekt positioniert. Während des eigentlichen Setzens, beispielsweise durch Treibladungen, kann der aus Kunststoff bestehende Aufnahmekörper sowieso keine Führung mehr herstellen. Der Aufnahmekörper ist aber aufgrund seiner Abmessungen in der Lage, den Nagel vor dem Setzen so auszurichten, daß dieser exakt koaxial zu dem Setzkanal verläuft.

In Weiterbildung der Erfindung kann vorgesehen sein, daß die Innenöffnung des Aufnahmekörpers einen quadratischen Querschnitt aufweist, obwohl der Schaft des Befestigungselements einen kreisrunden Querschnitt aufweist. Es hat sich herausgestellt, daß diese quadratische Form sehr gut geeignet ist, trotz möglicher Toleranzen eine exakte und sichere Ausrichtung des Befestigungselements zu verwirklichen.

Erfindungsgemäß ist in Weiterbildung vorgesehen, daß die Befestigungselemente so in die Aufnahmekörper eingesetzt werden, daß sie mit der Unterseite ihres Kopfes auf einer Stirnfläche der Aufnahmekörper aufliegen. Damit dient das Magazinband nicht nur zur koaxialen Ausrichtung, sondern auch zur Ausrichtung der Befestigungselemente in Längsrichtung des Setzkanals.

Erfindungsgemäß können die Flachseiten der Aufnahmekörper im Bereich der dem Kopf zugeordneten Stirnfläche eine Einkerbung aufweisen. Dies führt dazu, daß die Befestigungselemente an zwei diametral gegenüberliegenden Stellen mit der Unterseite des Kopfes auf dem Aufnahmekörper aufliegen. Da der Aufnahmekörper beim Setzvorgang zerrissen werden soll, kann dieser Zerstörungsvorgang dadurch erleichtert werden.

In weiterer Ausgestaltung der Erfindung kann vorgesehen sein, daß die Aufnahmekörper an ihren den Köpfen der Befestigungselemente abgewandten Stirnflächen im Bereich der Flachseiten je einen kreiszylinderbogenförmigen Bund aufweisen. Auch dieser Bund kann mit dazu beitragen, eine koaxiale Ausrichtung der Nägel im Setzkanal zu verbessern.

Insbesondere kann vorgesehen sein, daß die beiden Bunde jedes Aufnahmekörpers an einem Fortsatz des Aufnahmekörpers ausgebildet sind, dessen quer zur Längsrichtung des Magazinbands verlaufende Seiten eben ausgebildet sind.

Bei dem Magazinband nach der Erfindung erfolgt die Führung der Befestigungselemente während des Setzvorgangs durch die Köpfe der Befestigungselemente selbst.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: eine Seitenansicht eines Magazinbands ohne Befestigungselemente;
- Fig. 2: eine teilweise geschnittene Seitenansicht dreier Aufnahmekörper mit einem angedeuteten Nagel;
- Fig. 3: eine Aufsicht auf einen Aufnahmekörper von oben in Fig. 1 und 2;
- Fig. 4: eine Ansicht eines Aufnahmekörpers von unten in Fig. 1 und Fig. 2.

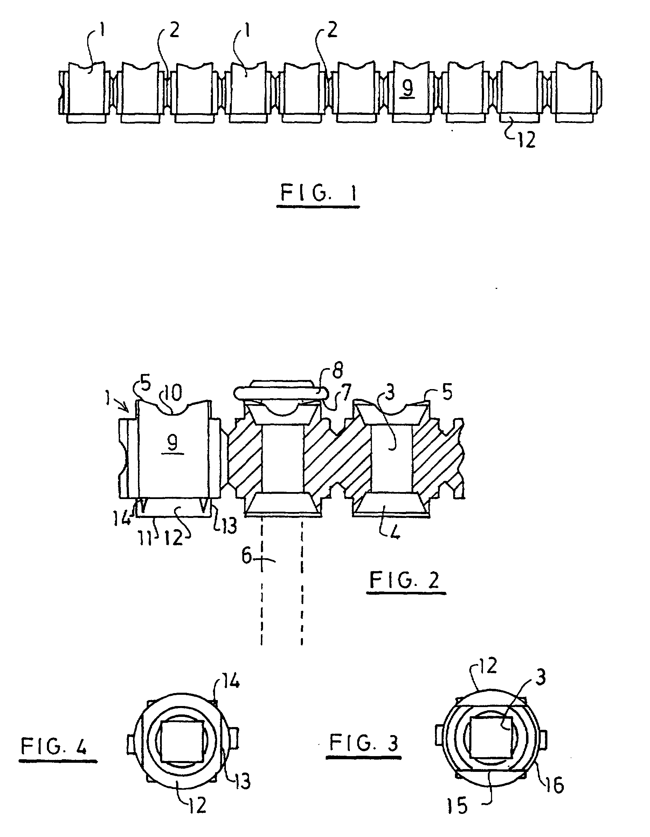

Fig. 1 zeigt eine Seitenansicht eines Magazinbands zur Aufnahme von Befestigungselementen, beispielsweise Nägeln. Die Befestigungselemente sind noch nicht eingesetzt. Das Magazinband besteht aus einer Reihe von Aufnahmekörpern 1, die nebeneinander längs einer Linie angeordnet und miteinander über Schwachstellen 2 verbunden sind. Das Magazinband wird in einem Setzgerät so eingesetzt, daß seine Längsrichtung, die in Figur 1 von links nach rechts verläuft, quer zu der Setzrichtung verläuft. Das Magazinband wird soweit eingeschoben, bis der vordere Aufnahmekörper 1 in dem Setzkanal angeordnet ist. Beim eigentlichen Setzen wird der in diesem Aufnahmekörper 1 angeordnete Nagel ausgeschoben und dabei der Aufnahmekörper 1 längs der Schwachstelle 2 abgerissen. Der Aufnahmekörper 1 wird dann normalerweise zerrissen bzw. zerstört.

Fig. 2 zeigt in vergrößertem Maßstab Einzelheiten eines Aufnahmekörpers 1. Links in Fig. 2 ist der vordere Aufnahmekörper 1 in Seitenansicht dargestellt, während in der Mitte und rechts die entsprechenden Aufnahmekörper in einem Schnitt dargestellt sind. Der Aufnahmekörper enthält eine Innenöffnung 3, die von oben nach unten durch den Aufnahmekörper hindurchgeht und senkrecht zu der Längsrichtung des Magazinbands verläuft. Die beiden Enden der Innenöffnung 3 sind in Form eines Trichters 4 erweitert.

In Fig. 2 stellt die obere Stirnfläche 5 der Aufnahmekörper diejenige Stirnfläche dar, auf der ein gestrichelt angedeutetes Befestigungselement 6 mit der Unterseite 7 seines Kopfes 8 aufliegt. Die Aufnahmekörper 1 weisen im Bereich ihrer Flachseiten 9 an dieser Stirnfläche 5 je eine Einkerbung 10 auf, die etwa halbkreisförmig ausgebildet ist und beidseits der die oberen Seitenkanten leicht schräg nach außen ansteigend ausgebildet sind. Damit wird erreicht, daß der Kopf 8 des Befestigungselements mit seiner Unterseite 7 nur im Bereich der Flachseiten des Rechtecks aufliegt, das den Querschnitt der Aufnahmekörper 1 bildet.

Im Bereich der gegenüberliegenden Stirnseite 11, das heißt derjenigen Stirnseite der Aufnahmekörper 1, die dem Kopf 8 der Befestigungselemente 6 abgewandt ist, ist an dem Aufnahmekörper ein Fortsatz 12 ausgebildet, der in Fortsetzung der Flachseiten 9 der Aufnahmekörper 1 im Querschnitt kreisbogenförmig nach außen vorsteht, siehe auch Fig. 3, an den in Längsrichtung des Magazinbands orientierten Seiten aber durch eine ebene Begrenzungsfläche 13 begrenzt wird.

An dem Fortsatz 12 sind insgesamt vier kleine keilartige Vorsprünge 14 angeformt, die beim Einsetzen in den Setzkanal ggf. leicht nach innen verformt werden.

Aus der Aufsicht der Fig. 3 ist zu erkennen, daß die Aufnahmekörper 1 einen etwa rechteckigen Querschnitt mit zwei Längsseiten 15 aufweisen, die parallel zueinander und zu der Längsrichtung des Magazinbands verlaufen. Die Stirnseiten des Querschnitts des Aufnahmekörpers sind dagegen kreisbogenförmig ausgebildet, siehe das Bezugszeichen 16 in Fig. 3. Aus der Aufsicht ist auch der Fortsatz 12 zu sehen, dessen Außenumfang auf einem Kreisbogen liegt, dessen Durchmesser dem Durchmesser der kreisbogenförmigen Außenseiten 16 des Querschnitts des Aufnahmekörpers 1 entspricht.

Fig. 4 zeigt eine Ansicht eines Aufnahmekörpers von unten. Unten ist der Fortsatz 12 zu sehen, dessen in Längsrichtung des Magazinbands gerichtete Seiten 13 eben verlaufen.

Aus den Figuren 3 und 4 ist ebenso wie aus Fig. 2 zu ersehen, daß die Enden der Innenöffnung 3 trichterförmig ausgebildet sind.

## Patentansprüche

1. Magazinband für Befestigungselemente (6), insbesondere Nägel, für ein Bolzensetzgerät, mit
1.1 einer Vielzahl von nebeneinander angeordneten Aufnahmekörpern (1), die
1.2 durch je eine seitliche Schwachstelle (2) mit dem jeweils benachbarten Aufnahmekörper (1) verbunden sind,
1.3 zur Aufnahme je eines Befestigungselements (6) bestimmt sind,
1.4 eine quer zur Längsrichtung des Magazinbands verlaufende Innenöffnung (3) für den Schaft des Befestigungselements (6) aufweisen, wobei
1.5 die Aufnahmekörper (1) die Querschnittsform eines Rechtecks mit abgerundeten Schmalseiten (16) aufweisen,
1.6 dessen Diagonale etwa dem Durchmesser des Setzkanals des Bolzensetzgeräts gleich ist und
1.7 dessen geradlinige Seitenkanten (15) parallel zur Längsrichtung des Magazinbands verlaufen, **dadurch gekennzeichnet, dass**
1.8 eine axiale Stirnfläche (5) der Aufnahmekörper (1) zur Auflage der Unterseite (7) des Kopfes (8) der Befestigungselemente (6) dient und
1.9 nur an der gegenüberliegenden Stirnseite (11) der Aufnahmekörper (1) ein Fortsatz (12) ausgebildet ist, der
1.9.1 in Fortsetzung der Flachseiten (9) der Aufnahmekörper (1) im Querschnitt kreisbogenförmig nach außen vorsteht.

2. Magazinband nach Anspruch 1, bei dem die Innenöffnung (3) einen quadratischen Querschnitt aufweist.

3. Magazinband nach einem der vorhergehenden Ansprüche, bei dem die Flachseiten (9) der Aufnahmekörper (1) im Bereich der dem Kopf (8) des Befestigungselements (6) zugeordneten Stirnfläche (5) eine Einkerbung (10) aufweisen.

4. Magazinband nach einem der vorhergehenden Ansprüche, bei dem die Aufnahmekörper (1) an ihren den Köpfen (8) der Befestigungselemente (6) abgewandten Stirnflächen (11) im Bereich der Flachseiten (9) je einen Bund aufweisen, dessen radiale Außenseite auf einem Bogen eines Kreiszylinders liegt.

5. Magazinband nach Anspruch 4, bei dem der Bund jedes Aufnahmekörpers (1) an dem Fortsatz (12) des Aufnahmekörpers (1) ausgebildet ist, dessen quer zur Längsrichtung des Magazinbands verlaufende Seiten (13) eben ausgebildet sind.

6. Magazinband nach einem der vorhergehenden Ansprüche, bei dem der Durchmesser des Kopfs (8) der Befestigungselemente (6) dem Durchmesser des Setzkanals des Bolzensetzgeräts gleich ist.

## Claims

1. Magazine strip for fixing elements (6), particularly nails, for a bolt setting device, having
1.1 a plurality of juxtaposed receiving bodies (1), which
1.2 are connected by in each case a lateral weak point (2) to the in each case adjacent receiving body (1),
1.3 for in each case receiving one fixing element (6),
1.4 an inner opening (3) for the shaft of the fixing element (6) at right angles to the longitudinal direction of the magazine strip, in which
1.5 the receiving bodies (1) have the cross-sectional shape of a rectangle with rounded narrow sides (16),
1.6 whose diagonal is roughly equal to the diameter of the setting channel of the bolt setting device and
1.7 whose linear lateral edges (15) are parallel to the longitudinal direction of the magazine strip, wherein
1.8 an axial end face (5) of the receiving body (1) is used for receiving the underside (7) of the head (8) of the fixing element (6) and
1.9 an extension (12) is formed solely on the opposite front end (11) of the receiving body (1) and
1.9.1 projects arcuately outwards in cross-section in an extension of the flat sides (9) of the receiving body (1).

2. Magazine strip according to claim 1, wherein the inner opening (3) has a square cross-section.

3. Magazine strip according to one of the preceding claims, wherein the flat sides (9) of the receiving body (1) have a notch (10) in the vicinity of the end face (5) associated with the head (8) of the fixing element (6).

4. Magazine strip according to one of the preceding claims, wherein each of the receiving bodies (1) is provided with a collar on their end faces (11) remote from the heads (8) of the fixing element (6) in the vicinity of the flat sides (9) and the radial outside of said collar rests on an arc of a circular cylinder.

5. Magazine strip according to claim 4, wherein the collar of each receiving body (1) is constructed on the extension (12) of said receiving body (1) and its sides (13) at right angles to the longitudinal direction of the magazine strip are planar.

6. Magazine strip according to one of the preceding claims, wherein the diameter of the head (8) of the fixing elements (6) is the same as the diameter of the setting channel of the bolt setting device.

## Revendications

1. Bande de maintien pour éléments de fixation (6) en particulier des clous pour un pistolet de scellement, comprenant
1.1 un grand nombre de corps de logement (1) disposés les uns à côté des autres,
1.2 qui sont reliés par un point faible latéral respectif (2) avec le corps de logement (1) respectif voisin,
1.3 qui sont destinés au logement d'un élément de fixation (6),
1.4 qui présentent une ouverture interne (3) s'étendant transversalement au sens longitudinal de la bande de maintien, pour la tige de l'élément de fixation (6),
1.5 les corps de logement (1) présentant la forme de section transversale d'un rectangle avec des côtés étroits arrondis (16),
1.6 dont la diagonale est égale au diamètre du canal de scellement de l'appareil de scellement et
1.7 dont les bords latéraux rectilignes (15) s'étendent parallèlement à la direction longitudinale de la bande de maintien, **caractérisée en ce que**
1.8 la surface axiale avant (5) du corps de logement (1) sert à l'application de la face inférieure (7) de la tête (8) des éléments de fixation (6) et
1.9 uniquement sur la face avant opposée (11) du corps de logement (1) est réalisé un prolongement (12)
1.9.1 qui fait saillie vers l'extérieur dans le prolongement des faces étroites (9) des corps de logement (1) dans la coupe transversale en formant un arc de cercle.

2. Bande de maintien selon la revendication 1, où l'ouverture interne (3) présente une section transversale quadratique.

3. Bande de maintien selon l'une des revendications précédentes où les faces étroites (9) des corps de logement (1) présentent une encoche (10)dans la zone de surface avant (5) associée à la tête (8) de l'élément de fixation (6).

4. Bande de maintien selon l'un des revendications précédentes dans laquelle les corps de logement (1) présentent sur leur surfaces frontales (11) détournées des têtes (8) des éléments de fixation (6) dans la zone des faces étroites (9) respectivement une collerette dont la face externe radiale repose sur un arc d'un cylindre de cercle.

5. Bande de maintien selon la revendication 4, dans laquelle la collerette de chaque corps de maintien (1) est ménagée sur le prolongement (12) du corps de logement (1) dont les faces (13) s'étendant transversalement au sens longitudinal de la bande de maintien sont réalisées planes.

6. Bande de maintien selon l'une des revendications précédentes, dans laquelle le diamètre de la tête (8) des éléments de fixation (6) est égal au diamètre du canal de scellement de l'appareil de scellement.
